(19) Europäisches Patentamt / European Patent Office / Office européen des brevets

(11) **EP 4 446 974 B1**

(12) ## EUROPEAN PATENT SPECIFICATION

(45) Date of publication and mention
of the grant of the patent:
**18.02.2026  Bulletin 2026/08**

(21) Application number: **23188329.9**

(22) Date of filing: **28.07.2023**

(51) International Patent Classification (IPC):
**G06T 5/00** (2024.01)      **G06T 7/13** (2017.01)

(52) Cooperative Patent Classification (CPC):
**G06T 7/13; G06T 5/73; G06T 5/94;**
G06T 2207/20012; G06T 2207/20192

---

(54) **IMAGE PROCESSING METHOD, ELECTRONIC APPARATUS AND CHIP**

BILDVERARBEITUNGSVERFAHREN, ELEKTRONISCHE VORRICHTUNG UND CHIP

PROCÉDÉ DE TRAITEMENT D'IMAGE, APPAREIL ÉLECTRONIQUE ET PUCE

---

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.04.2023  CN 202310383292**

(43) Date of publication of application:
**16.10.2024  Bulletin 2024/42**

(73) Proprietor: **Beijing X-Ring Technology Co., Ltd.
Beijing 100085 (CN)**

(72) Inventor: **HU, Yi
Shanghai, 100029 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(56) References cited:
**EP-B1- 1 816 602    CN-A- 114 663 302**

- **CURLANDER PAUL JOSEPH: "Image
Enhancement Using Digital Adaptive Filtering",
MASTER'S THESIS, 3 November 1977
(1977-11-03), pages 1 - 99, XP093085237,
Retrieved from the Internet <URL:https://dspace.
mit.edu/handle/1721.1/16272>**
- **ELI PELI: "Contrast in complex images",
JOURNAL OF THE OPTICAL SOCIETY OF
AMERICA A, vol. 7, no. 10, 1 October 1990
(1990-10-01), pages 2032, XP055031019, ISSN:
1084-7529, DOI: 10.1364/JOSAA.7.002032**

---

**Description**

**FIELD**

The present invention relates to a field of image processing, and more particularly to an image processing method, an electronic apparatus and a chip.

**BACKGROUND**

Image sharpening, also known as edge enhancement, is an image processing means to improve image clarity by enhancing edge signals. In the process of image sharpening, the high-frequency signal with strong energy in the image to be processed is extracted by filtering, and the extracted high-frequency signal is added back to the image to be processed, which can enhance the high-frequency variables in the image to be processed, thus compensating the image contour, enhancing the display effect of the edge part and the gray jump part of the image, and improving the image clarity.

However, when the image is sharpened by the sharpening method in the related art, there will be problems such as black edges, which will affect the image display quality.

XP93085237A relates to image enhancement, which is an attempt to improve the aesthetic qualities of an image. Improvement of these qualities makes the image subjectively better. Adding overshoot to edges sharpens an image. Sharper images are judged to be subjectively better until sharpening results in light and dark band artifacts on edges. Considerations of human perception of brightness and contrast led to this experimentation with adaptive filtering to improve sharpness and minimize artifacts. A computer program has been developed which sharpens digitized pictures according to local area brightness and contrast content. By balancing sharpening between low and high contrast edges and dark and light tones, sharper pictures without artifacts are produced. Comparison pictures using linear, homomorphic, and previous adaptive filtering algorithms are also shown. Another application of adaptive filtering is noise suppression. A noisy picture is smoothed, eliminating the noise, then adaptively filtered to recover the edges and enhance the detail.

EP1816602A1 relates to an image processing apparatus, which includes an edge-direction detector (101,401) that detects an edge direction in an original image; a confidence detector (103,403) that detects a confidence of the edge direction; a contrast detector (105,405) that detects a contrast intensity; a texture-contrast-weight setter (108,408) that sets a texture-contrast weight; an edge-contrast-weight setter (109,409) that sets an edge-contrast weight; a texture-weight setter (113,413) that sets a texture weight; an edge-weight setter (114,414) that sets an edge weight; a texture filter (203) that performs texture filtering to generate a texture-filter image; an edge filter (205) that performs edge filtering to generate an edge-filter image; a texture combiner (204) that combines the original image and the texture-filter image to generate a texture-combination image; and an edge combiner (206) that combines the texture-combination image and the edge-filter image to generate an edge-combination image.

XP55031019A teaches that the physical contrast of simple images such as sinusoidal gratings or a single patch of light on a uniform background is well defined and agrees with the perceived contrast, but this is not so for complex images. Most definitions assign a single contrast value to the whole image, but perceived contrast may vary greatly across the image. Human contrast sensitivity is a function of spatial frequency; therefore the spatial frequency content of an image should be considered in the definition of contrast. In this paper a definition of local band-limited contrast in images is proposed that assigns a contrast value to every point in the image as a function of the spatial frequency band. For each frequency band, the contrast is defined as the ratio of the bandpass-filtered image at that frequency to the lowpass image filtered to an octave below the same frequency (local luminance mean). This definition raises important implications regarding the perception of contrast in complex images and is helpful in understanding the effects of image-processing algorithms on the perceived contrast. A pyramidal image-contrast structure based on this definition is useful in simulating nonlinear, threshold characteristics of spatial vision in both normal observers and the visually impaired.

**SUMMARY**

The present invention provides an image processing method, an electronic apparatus and a chip, so as to solve problems in the related art and improve the display quality of the sharpened image.

Embodiments of a first aspect of the present invention provide an image processing method, and the method includes: determining first gain information of an image to be processed based on a contrast of the image to be processed; normalizing the first gain information based on a local average brightness of the image to be processed to obtain second gain information; obtaining target edge information of the image to be processed based on the second gain information; and sharpening the image to be processed based on the target edge information. Obtaining the target edge information of the image to be processed based on the second gain information includes: filtering the image to be processed to obtain initial edge information of the image to be processed; and obtaining the target edge information of the image to be processed based on the second gain information and the initial edge information. Normalizing the first gain information based on the local average brightness of the image to be processed to obtain the second gain information includes: normalizing the first gain information based on the local average brightness of the image to be processed; acquiring first scene gain information of the image to be processed based on pixel information of the image to be processed and a preset first correlation relationship; and determining the second gain information based on the first scene gain information and the normalized first gain information.

Optionally, the first gain information includes third gain information, fourth gain information and fifth gain information, and determining the first gain information of the image to be processed based on the contrast of the image to be processed includes: determining the third gain information based on a local contrast of the image to be processed; determining the fourth gain information based on an edge contrast of the image to be processed; and determining the fifth gain information based on a texture contrast of the image to be processed.

Optionally, normalizing the first gain information based on the local average brightness of the image to be processed to obtain the second gain information includes: normalizing the third gain information, the fourth gain information and the fifth gain information based on the local average brightness of the image to be processed to obtain the second gain information.

Optionally, the method further includes: determining the local contrast of the image to be processed based on maximum and minimum values of a local brightness of the image to be processed.

Optionally, the method further includes: determining a first uniformity of the image to be processed in a first gradient direction, in which the first gradient direction includes a horizontal direction and a vertical direction; determining a second uniformity of the image to be processed in a second gradient direction, in which the second gradient direction includes a first diagonal direction and a second diagonal direction; and determining the edge contrast of the image to be processed based on the first uniformity and the second uniformity.

Optionally, determining the first uniformity of the image to be processed in the first gradient direction includes: acquiring first gradient information of the image to be processed in the horizontal direction; acquiring second gradient information of the image to be processed in the vertical direction; and determining the first uniformity based on a difference degree between the first gradient information and the second gradient information.

Optionally, determining the second uniformity of the image to be processed in the second gradient direction includes: acquiring third gradient information of the image to be processed in the first diagonal direction; acquiring fourth gradient information of the image to be processed in the second diagonal direction; and determining the second uniformity based on a difference degree between the third gradient information and the fourth gradient information.

Optionally, determining the fifth gain information based on the texture contrast of the image to be processed includes: acquiring a gradient average of the image to be processed in a plurality of gradient directions; and determining the fifth gain information of the image to be processed based on the gradient average.

Optionally, the method further includes: acquiring second scene gain information based on the local average brightness of the image to be processed and a preset second correlation relationship; and updating the second gain information by using the second scene gain information.

Optionally, the image to be processed includes at least two layers, and obtaining the target edge information of the image to be processed based on the second gain information includes: obtaining edge information of each layer based on second gain information of each layer in the image to be processed; and adding the edge information of each layer together to obtain the target edge information of the image to be processed.

Embodiments of a second aspect of the present invention provide an electronic apparatus, and the electronic apparatus includes at least one processor; and a memory communicated with the at least one processor. The memory stores instructions executable by the at least one processor, and the at least one processor is configured to execute the method described in the embodiments of the first aspect of the present invention, when the instructions are executed by the at least one processor.

Embodiments of a third aspect of the present invention provide a chip, and the chip includes one or more interface circuits and one or more processors. The interface circuit is configured to receive a signal from a memory of an electronic apparatus and send the signal to the processor, and the signal includes computer instructions stored in the memory of the electronic apparatus. When the computer instructions are executed by the processor, the electronic apparatus is allowed to execute the method described in the embodiments of the first aspect of the present invention.

To sum up, in the image processing method, the electronic apparatus and the chip provided by the embodiments of the present invention, the first gain information of the image to be processed is determined based on the contrast of the image to be processed, the first gain information is normalized based on the local average brightness of the image to be processed to obtain the second gain information, and the target edge information of the image to be processed is obtained based on the second gain information. The target edge information is configured for sharpening the image to be processed. According to the solution provided by the present invention, the gain information is normalized by using the average brightness of the local area, and the balance of the gain information of different pixels is improved, so that the frequency control effect is improved when the signal frequency in the image to be processed is controlled by using the obtained gain information, thus improving the balance and accuracy of sharpening results, avoiding the problem of a black edge occurring in a pixel area with a low intensity due to signal enhancement by directly adding the high-frequency signal back, and hence improving the image display quality. Furthermore, by determining the gain information from three dimensions, namely the local contrast, the edge contrast and the texture contrast, the corresponding gain information can be determined for the high-frequency signal, the intermediate-frequency signal and the low-frequency signal of the image to be processed, respectively, thus improving the accuracy of the obtained gain information and hence improving the image display quality.

It is to be understood that both the foregoing general description and the following detailed description are exemplary and explanatory only and are not restrictive of the present invention.

## BRIEF DESCRIPTION OF THE DRAWINGS

The accompanying drawings, which are incorporated in and constitute a part of this specification, illustrate embodiments consistent with the present invention and together with the description, serve to explain the principles of the present invention, and do not unduly limit the present invention.

Fig. 1 is a schematic diagram of an application scenario according to an embodiment of the present invention.

Fig. 2 is a flow chart of an image processing method according to an embodiment of the present invention.

Fig. 3 is a flow chart of an image processing method according to an embodiment of the present invention.

Fig. 3a is a schematic diagram of a first diagonal in an image processing method according to an embodiment of the present invention.

Fig. 3b is a schematic diagram of a second diagonal in an image processing method according to an embodiment of the present invention.

Fig. 4 is a flow chart of determining first gain information in an image processing method according to an embodiment of the present invention.

Fig. 5 is a flow chart of determining second gain information in an image processing method according to an embodiment of the present invention.

Fig. 6 is a flow chart of determining second gain information in an image processing method according to an embodiment of the present invention.

Fig. 7 is a flow chart of determining target edge information in an image processing method according to an embodiment of the present invention.

Fig. 8 is a flow chart of adding target edge information back to an image to be processed in an image processing method according to an embodiment of the present invention.

Fig. 9 is a comparison diagram of sharpening results obtained by using an image processing method in the related art and an image processing method according to an embodiment of the present invention.

Fig. 10 is a comparison diagram of results of sharpening an original image by using an image processing method in the related art and an image processing method according to an embodiment of the present invention.

Fig. 11 is a block diagram of an image processing device according to an embodiment of the present invention.

Fig. 12 is a block diagram of an electronic apparatus according to an embodiment of the present invention.

Fig. 13 is a block diagram of a chip according to an embodiment of the present invention.

## DETAILED DESCRIPTION

Hereinafter, embodiments of the present invention will be described in detail, examples of which are illustrated in the accompanying drawings, wherein the same or similar reference numerals indicate the same or similar elements or elements having the same or similar functions throughout. The embodiments described below by referring to the accompanying drawings are exemplary and are intended to explain the present invention, and should not be construed as limiting the present invention.

Sharpening an image can highlight characteristics of an edge and an outline of an object in the image, or characteristics of some linear target elements, so as to improve the contrast between the edge of the object and surrounding pixels, thus improving the clarity of a blurred area in the image. For example, after the image is smoothed, the boundary and outline of the image may become blurred, and the clarity of the boundary and outline of the image can be improved through image processing technology. For another example, for an underwater image, the image processing technology may be used to enhance the edge and outline of a scene in the image.

In the related art, in order to process the image, a multi-scale filtering process may be performed on the image to be processed, and layer information obtained after filtering is fused to extract a high-frequency signal with strong energy to obtain the layer information to be added back, and then the layer information to be added back is added to the image to be processed to enhance a high-frequency component in the image to be processed. An image texture map may be obtained according to gradient information of the image to be processed, and a just noticeable difference image may be calculated through the image texture map and the image background, then a gain coefficient may be calculated by using the just noticeable difference image and the high-frequency component, and the high-frequency signal with strong energy may be extracted from the image to be processed according to the gain coefficient, so as to enhance the high-frequency component in the image to be processed by using the extracted high-frequency signal. However, there is often a small signal with a weak intensity in an area where the high-frequency signal is located. In the process of extracting the high-frequency signal by using image processing algorithms in the related art, an area where the small signal with the weak intensity is located will form a "dark area", therefore directly adding the high-frequency signal back will cause the "dead black" and "black edge" in the "dark area", which will affect the image display quality.

In order to solve the problems existing in the related art, the present invention proposes an image processing method, an image processing device, an electronic apparatus, a chip and a storage medium, which normalize the gain information by using an average brightness of local areas, so as to improve the balance of the gain information of different pixels, thus improving the frequency control effect when controlling the signal frequency in the image to be processed by using the obtained gain information, improving the balance and accuracy of sharpening results, avoiding the problem of the black edge occurring in a pixel area with a low intensity due to signal enhancement by directly adding the high-frequency signal back, and hence improving the image display quality. Furthermore, by determining the gain information from three dimensions, namely a local contrast, an edge contrast and a texture contrast, the corresponding gain information can be determined for the high-frequency signal, an intermediate-frequency signal and a low-frequency signal of the image to be processed, thus improving the accuracy of the obtained gain information and hence improving the image display quality.

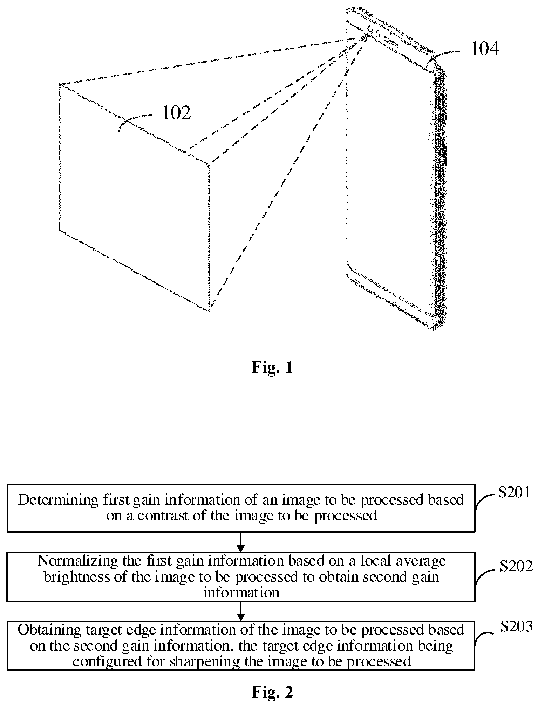

Before introducing the detailed solution of the present invention, the scenario to which the solution of the present invention is applied will be described first. Fig. 1 is an application scene diagram of an image processing method according to an embodiment. As shown in Fig. 1, the present invention scenario includes an electronic apparatus 104, and a camera module and several application programs may be mounted in the electronic apparatus 104. The present invention program may generate an image acquisition instruction to acquire an image, and the camera module may acquire an image 102. The camera module may include a front camera module and/or a rear camera module. Finally, a target image is sent to a target application program. The electronic apparatus 104 may be a smart phone, a tablet computer, a personal digital assistant, a wearable device, etc.

In some embodiments, the above electronic apparatus may also be a vehicle-mounted apparatus or a vehicle networking apparatus, such as a smart car, etc. In the present invention, only the smart phone is taken as an example, but it does not mean that it limits the scope of the present invention.

Cameras may be mounted on the electronic apparatus, and images may be obtained through the mounted cameras. The cameras may be divided into a laser camera and a visible light camera according to different obtained images. The laser camera may obtain images formed by laser irradiating on objects, and the visible light image may obtain images formed by visible light irradiating on objects. Several cameras may be mounted on the electronic apparatus, and their mounting positions are not limited. For example, one camera may be mounted on a front panel of the electronic apparatus, and two cameras may be mounted on a back panel of the electronic apparatus. The cameras may also be mounted inside the electronic apparatus in an embedded way, and then the cameras may be turned on by rotating or sliding. Specifically, the electronic apparatus may be provided with a front camera and a rear camera, and the front camera and the rear camera may acquire images from different perspectives. Generally, the front camera may acquire images from a front perspective of the electronic apparatus, and the rear camera may acquire images from a back perspective of the electronic apparatus.

It should be understood that, in the present invention, the front camera or the rear camera is only used as an example to distinguish the shooting angles of different cameras, but not to limit the functions of multiple cameras, and the multiple cameras in the present invention all may be rear cameras or front cameras at the same time, which is not limited in the present invention.

Several application programs may be mounted in the electronic apparatus, and the present invention program refers to a software written for a certain application purpose in the electronic apparatus, and the electronic apparatus may realize the demand service for users through the present invention program. When the present invention program needs to acquire images, it will generate the image acquisition instruction, and the electronic apparatus will call the camera module according to the image acquisition instruction to acquire images. The image acquisition instruction refers to an instruction used to trigger an image acquisition operation.

The electronic apparatus is also provided with a processor, and an image processing module in the processor may correct the image acquired by the camera module, for example, executing the image processing method provided by the present invention.

The embodiments of the present invention may be applied to scenes requiring image processing, for example, it may be applied to full scenes such as image processing in a single-frame photographing mode, image processing in a multi-frame photographing mode, image processing in a preview mode, image processing in a video recording mode, image processing in a night scene or image processing in a video mode, and for another example, it may also be applied to scenes where an image signal processing (ISP) module is a key module that affects the processor and requires high-quality edge sharpening control in the image processing process of the image pipeline.

Fig. 2 is a flow chart of an image processing method according to an embodiment of the present invention. As shown in Fig. 2, the method includes the following steps.

At step 201, first gain information of an image to be processed is determined based on a contrast of the image to be processed.

In the present invention, the contrast includes a contrast of each pixel in the image to be processed. The contrast of each pixel may be a contrast of a neighborhood of the pixel, for example, taking a 3*3 neighborhood or 5*5 neighborhood of each pixel as a calculation area to calculate the contrast of the corresponding pixel.

In the present invention, the contrast of the image to be processed may include a plurality of dimensions of contrast, and specifically, may include a local contrast, an edge contrast and a texture contrast. Determining the first gain information by using the plurality of dimensions of contrast can improve the accuracy of the determined first gain information, thus better controlling the signal frequency during sharpening.

In the present invention, the first gain information is basic information for extracting high-frequency signals, and the first gain information may also be called a basic gain, which is not limited in the present invention, as long as its function can be realized.

At step 202, the first gain information is normalized based on a local average brightness of the image to be processed, to obtain second gain information.

In the present invention, the local average brightness includes the local average brightness of each pixel in the image to be processed. "Local" as used herein, refers to a specific region of an image that is immediately surrounding or in the vicinity of a given pixel. The extent of this region can be adjustable and is defined relative to the position of the pixel of interest. It is this local region that is used for calculating properties such as the average brightness or contrast when processing the image. The local average brightness of each pixel may be an average brightness of the neighborhood of the pixel, for example, taking the 3*3 neighborhood or 5*5 neighborhood of each pixel as the calculation area to calculate the local average brightness of the corresponding pixel.

In the present invention, the first gain information is normalized to converge the gain information of different pixels, thus improving the balance between the gain information of different pixels, avoiding the problem of a "dark area" occurring in an extraction area due to directly adding the extracted high-frequency signal back, and hence improving the display quality of the sharpened image.

At step 203, target edge information of the image to be processed is obtained based on the second gain information, and the target edge information is configured for sharpening the image to be processed.

In the present invention, different frequency signals in the image to be processed can be controlled more accurately by using the second gain information determined according to the contrast and brightness, so that using the second gain information to control the image to be processed can obtain the edge information, i.e., the target edge information, from the image to be processed more accurately, thus improving the image processing effect.

In the present invention, in order to further improve the extraction accuracy of the edge information, initial edge information of the image to be processed may be obtained first, and the initial edge information may be controlled by using the second gain information, so as to obtain more accurate edge information, i.e., the target edge information. Here, the initial edge information may be an original filtered signal obtained by a high-frequency filter.

To sum up, in the image processing method provided by the present invention, the first gain information of the image to be processed is determined based on the contrast of the image to be processed, the first gain information is normalized based on the local average brightness of the image to be processed, to obtain the second gain information, and the target edge information of the image to be processed is obtained based on the second gain information. The target edge information is configured for sharpening the image to be processed. According to the solution provided by the present invention, the gain information is normalized by using the average brightness of the local area, so as to improve the balance of the gain information of different pixels, thus improving the frequency control effect when the signal frequency in the image to be processed is controlled by using the obtained gain information, improving the balance and accuracy of sharpening results, avoiding the problem of the black edge occurring in the pixel area with the low intensity due to signal enhancement by directly adding the high-frequency signal back, and hence improving the image display quality. Furthermore, by determining the gain information from three dimensions, namely the local contrast, the edge contrast and the texture contrast, the corresponding gain information can be determined for the high-frequency signal, the intermediate-frequency signal and the low-frequency signal of the image to be processed, respectively, thus improving the accuracy of the obtained gain information and hence improving the image display quality.

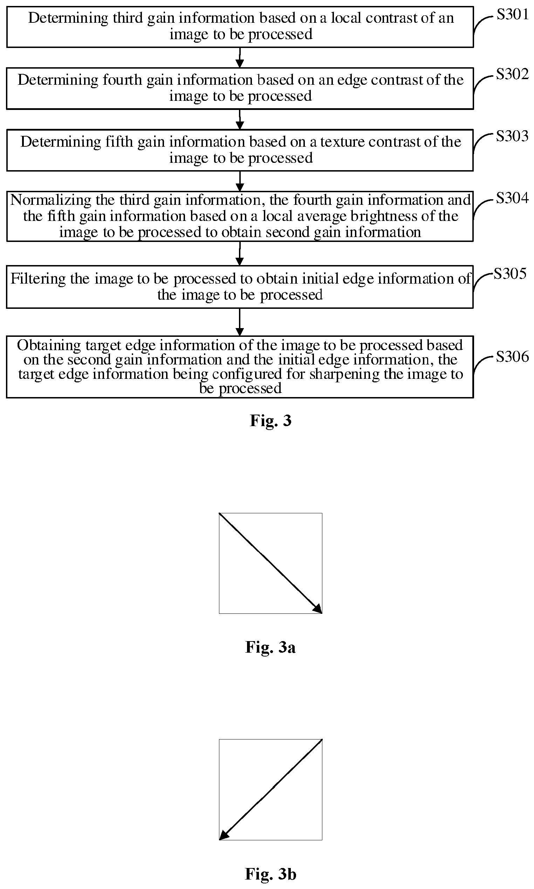

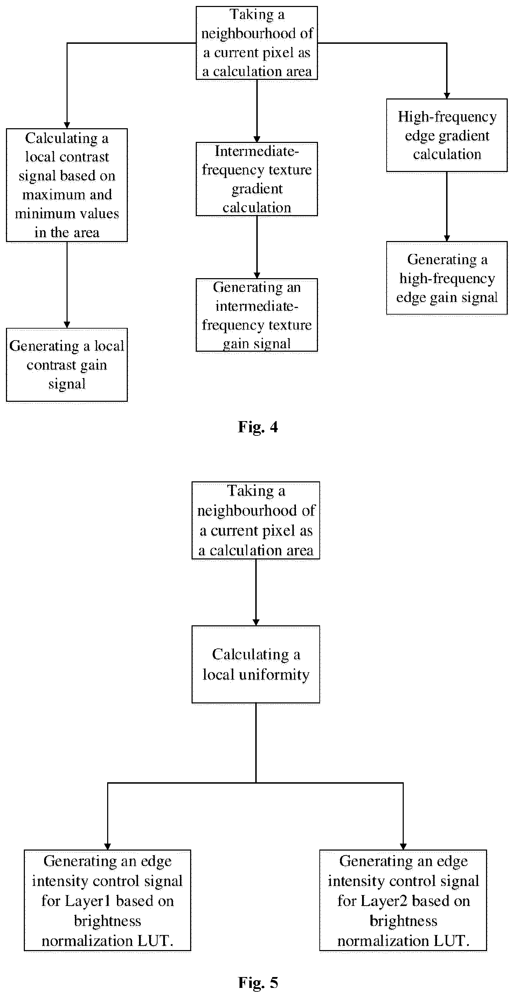

Based on the embodiment shown in Fig. 2, Fig. 3 further shows a flow chart of an image processing method according to an embodiment of the present invention, and illustrates steps 301 to 306. For convenience of understanding, Fig. 4 shows a flow chart of determining first gain information in an image processing method according to embodiment of the present invention, i.e., a flow chart from step 301 to step 303.

At step 301, third gain information is determined based on a local contrast of the image to be processed.

In the present invention, the neighborhood of each pixel may be taken as the calculation area, and the local contrast corresponding to each pixel may be determined based on maximum and minimum values in the calculation area of each pixel.

Based on this, in some embodiments, the method may further include: determining the local contrast of the image to be processed based on maximum and minimum values of a local brightness of the image to be processed.

Specifically, for each pixel, the 3*3 neighborhood of the current pixel is taken as the calculation area, maximum and minimum brightness values in the calculation area are obtained, a difference between the maximum and minimum brightness values is calculated, and then the local contrast of the pixel is determined according to the calculated difference, that is, a contrast signal is calculated based on the maximum and minimum values in the area, to generate a contrast gain signal.

It should be noted that when calculating the local contrast based on the maximum and minimum values in the calculation area, windows with different sizes such as 3*3, 5*5, 7*7 and 9*9 may be selected as a neighborhood range, and different window sizes correspond to different frequency ranges of the image to be processed. For example, the 3*3 window corresponds to a higher frequency signal and a thinner edge, and the 9*9 window corresponds to a lower frequency signal and a thicker edge and texture. When selecting a larger window, it may have the downward compatibility for the smaller window to perform the finer control. For example, when selecting the 9*9 window as the neighborhood range, it may have the downward compatibility for the smaller windows such as 7*7 and 5*5. The larger the window size, the greater the hardware overhead. In order to ensure the balance between the hardware overhead and the algorithm effect, the 3*3 window is selected as the neighborhood range in the present invention.

It should be noted that the local contrast may also be called a gain based on the contrast, which is not limited by the embodiments of the present invention, as long as its function can be realized.

In the present invention, before determining the local contrast of the pixel according to the calculated difference, a corresponding relationship between the local contrast and the brightness difference may be constructed first, which may be realized by displaying a look up table (LUT). For example, LC_LUT may be constructed first according to the historical brightness difference and the corresponding historical local contrast, to realize a mapping relationship between the local contrast and the brightness difference.

In the present invention, in order to improve the determination result of the gain information and further improve the frequency control result of the target edge signal, corresponding gain information may be obtained for different layers in the image to be processed, for example, the third gain information of different layers in the image to be processed may be obtained. Different layers may be obtained by down-sampling the image to be processed based on different down-sampling scales. The number of layers may be greater than or equal to two, and in order to ensure the balance of the control effect and the hardware overhead, the number of layers of the image to be processed in the embodiments of the present invention is two. Hereinafter, the description is make in the case that the number of layers of the image to be processed is two.

For example, the 3*3 neighborhood of the current pixel is taken as the calculation area, and the distribution of the calculation area is shown in Table 1:

Table 1

| | | |
|---|---|---|
| 11 | 12 | 13 |
| 21 | 22 | 23 |
| 31 | 32 | 33 |

The brightness distribution in the area may be denoted by the following formula:

$$\text{window3x3} = \text{channel\_in} \ (i\text{-}1{:}\ i\text{+}1,\ j\text{-}1{:}\ j\text{+}1).$$

Channel_in represents a brightness signal of an original image to be subject to edge sharpening (i.e. the image to be processed).

The local brightness maximum and the local brightness minimum may be denoted by the following formulas:

$$\text{local\_max} = \text{max} \ (\text{window3x3});$$

$$local\_min = \min(window3x3).$$

The difference is calculated and the local contrast of the pixel is index-searched from the LC_LUT according to the difference. The local contrast may be denoted by the following formulas:

$$contrast\_gain\_layer1 = LC\_LUT\_LAYER1(local\_max - local\_min);$$

$$contrast\_gain\_layer2 = LC\_LUT\_LAYER2(local\_max - local\_min).$$

In the present invention, the third gain information may also be called a contrast signal, which is not limited by the embodiments of the present invention, as long as its function can be realized.

At step 302, fourth gain information is determined based on an edge contrast of the image to be processed.

In the present invention, determining the fourth gain information based on the edge contrast of the image to be processed may be determining the fourth gain information of each layer in the image to be processed based on the edge contrast of each layer in the image to be processed, that is, calculating a high-frequency edge gradient to generate a high-frequency edge gain signal.

In the present invention, in order to improve the accuracy of the obtained edge contrast, thus improving the accuracy of the fourth gain information, the edge contrast may be determined based on uniformities in different gradient directions.

Based on this, in some embodiments, the method may further include: determining a first uniformity of the image to be processed in a first gradient direction, in which the first gradient direction includes a horizontal direction and a vertical direction; determining a second uniformity of the image to be processed in a second gradient direction, in which the second gradient direction includes a first diagonal direction and a second diagonal direction; and determining the edge contrast of the image to be processed based on the first uniformity and the second uniformity.

Specifically, the first uniformity of each layer in the image to be processed in the first gradient direction and the second uniformity of each layer in the image to be processed in the second gradient direction are determined.

In the present invention, the first uniformity of each layer in the first gradient direction may be the uniformity between the gradient of each layer in the horizontal direction and the gradient of each layer in the vertical direction, and the second uniformity of each layer in the second gradient direction may be the uniformity between the gradient of each layer in the first diagonal direction and the gradient of each layer in the second diagonal direction. The first diagonal may be the diagonal from the upper left to the lower right in the calculation area, as shown in Fig. 3a, and the second diagonal may be the diagonal from the upper right to the lower left in the calculation area, as shown in Fig. 3b.

In the present invention, in order to accurately obtain the uniformity of the image to be processed in the first gradient direction, the corresponding uniformity may be determined according to a difference degree of the image to be processed in the first gradient direction.

Based on this, in some embodiments, determining the first uniformity of the image to be processed in the first gradient direction may include: acquiring first gradient information of the image to be processed in the horizontal direction; acquiring second gradient information of the image to be processed in the vertical direction; and determining the first uniformity based on a difference degree between the first gradient information and the second gradient information.

Specifically, the first gradient information in the horizontal direction and the second gradient information in the vertical direction of each layer in the image to be processed are obtained, and the first uniformity of each layer is determined based on the difference degree between the first gradient information and the corresponding second gradient information of each layer. The first gradient information may be a sum of an upward gradient value and a downward gradient value, and the second gradient information may be a sum of a leftward gradient value and a rightward gradient value.

In the present invention, for each layer, determining the first uniformity of the layer based on the difference degree between the first gradient information and the corresponding second gradient information of the layer may be determining whether a ratio of the first gradient information to the second gradient information meets a preset condition, and specifically may include: judging whether a first ratio of first layer information to second layer information is greater than a preset threshold, to obtain a first judgment result; when the first judgment result indicates that the first ratio is greater than the preset threshold, using a corresponding relationship between the first gradient information and the first uniformity to determine the first uniformity of the layer; when the first judgment result indicates that the first ratio is not greater than the preset threshold, judging whether a second ratio of the second layer information to the first layer information is greater than the preset threshold, to obtain a second judgment result; When the second judgment result indicates that the second ratio is greater than the preset threshold, using a corresponding relationship between the second gradient information and the first uniformity to determine the first uniformity of the layer; when the second judgment result indicates that the second ratio is not greater than the preset threshold, determining the first uniformity of the layer as 1.

In the present invention, the preset threshold is an adjustable threshold, and may be set according to the present invention scenario. It should be noted that the preset threshold may be set according to historical data, and the preset threshold in the embodiments of the present invention may be set to be 2.

In the present invention, in order to accurately obtain the uniformity of the image to be processed in the second gradient direction, the corresponding uniformity may be determined according to the difference degree of the image to be processed in the second gradient direction.

Based on this, in some embodiments, determining the second uniformity of the image to be processed in the second gradient direction may include: acquiring third gradient information of the image to be processed in the first diagonal direction; acquiring fourth gradient information of the image to be processed in the second diagonal direction; and determining the second uniformity based on a difference degree between the third gradient information and the fourth gradient information.

Specifically, the third gradient information in the first diagonal direction and the fourth gradient information in the second diagonal direction of each layer in the image to be processed are obtained, and the second uniformity of each layer is determined based on the difference degree between the third gradient information and the corresponding fourth gradient information of each layer.

Specifically, the third gradient information in the first diagonal direction and the fourth gradient information in the second diagonal direction of each layer in the image to be processed are obtained, and the second uniformity of each layer is determined based on the difference degree between the third gradient information and the corresponding fourth gradient information of each layer. The third gradient information may be a sum of an upward-leftward gradient value and a downward-rightward gradient value, and the fourth gradient information may be a sum of an upward-rightward gradient value and a downward-leftward gradient value.

In the present invention, for each layer, based on the difference degree between the third gradient information and the corresponding fourth gradient information of the layer, determining the second uniformity of the layer may be determining whether a ratio of the third gradient information to the fourth gradient information meets a preset condition, and specifically may include: judging whether a third ratio of third layer information to fourth layer information is greater than a preset threshold, to obtain a third judgment result; when the third judgment result indicates that the third ratio is greater than the preset threshold, using a corresponding relationship between the third gradient information and the second uniformity to determine the second uniformity of the layer; when the third judgment result indicates that the third ratio is not greater than the preset threshold, judging whether a fourth ratio of the fourth layer information to the third layer information is greater than the preset threshold, to obtain a fourth judgment result; when the fourth judgment result indicates that the fourth ratio is greater than the preset threshold, using a corresponding relationship between the fourth gradient information and the second uniformity to determine the second uniformity of the layer; when the fourth judgment result indicates that the fourth ratio is not greater than the preset threshold, determining the second uniformity of the layer as 1.

It should be noted that the corresponding relationship between the gradient information and the uniformity may be pre-constructed according to the historical gradient information and the corresponding historical uniformity information, and the corresponding relationship may be realized by LUT. For example, EDGE_LUT may be constructed according to the historical horizontal gradient value and the corresponding historical uniformity.

In the present invention, the first uniformity may also be called a first edge gain, and the second uniformity may also be called a second edge gain, which are not limited by the embodiments of the present invention, as long as their functions can be realized.

For example, the specific process of determining the first uniformity and the second uniformity may be as follows.

First, the gradient values of the 3*3 calculation area in eight directions are calculated, and the gradient values in the eight directions may be denoted by the following formulas:

$$\mathrm{grad\_up} = \mathrm{abs}\,(\mathrm{window3x3}\,(2,\,2)\text{-}\mathrm{window3x3}\,(1,\,2));$$

$$\mathrm{grad\_down} = \mathrm{abs}\,(\mathrm{window3x3}\,(2,\,2)\text{-}\mathrm{window3x3}\,(3,\,2));$$

$$\mathrm{grad\_left} = \mathrm{abs}\,(\mathrm{window3x3}\,(2,\,2)\text{-}\mathrm{window3x3}\,(2,\,1));$$

$$\mathrm{grad\_right} = \mathrm{abs}\,(\mathrm{window3x3}\,(2,\,2)\text{-}\mathrm{window3x3}\,(2,\,3));$$

$$\text{grad\_d1} = \text{abs (window3x3 (2, 2)-window3x3 (1, 1))};$$

$$\text{grad\_d2} = \text{abs (window3x3 (2, 2)-window3x3 (1, 3))};$$

$$\text{grad\_d3} = \text{abs (window3x3 (2, 2)-window3x3 (3, 1))};$$

$$\text{grad\_d4} = \text{abs (window3x3 (2, 2)-window3x3 (3, 3))}.$$

Grad_up represents an upward gradient value, grad_down represents a downward gradient value, grad_left represents a leftward gradient value, grad_right represents a rightward gradient value, grad_d1 represents an upward-leftward gradient value, grad_d2 represents an upward-rightward gradient value, grad_d3 represents a downward-leftward gradient value and grad_d4 represents a downward-rightward gradient value.

Then, for each layer, the uniformity in the first gradient direction is determined.

Specifically, if the horizontal gradient is greater than twice the vertical gradient, or the vertical gradient is greater than twice the horizontal gradient, it is considered that this pixel is located at a strong edge in the horizontal or vertical direction, and EDGE_LUT_LAYER1 or EDGE_LUT_LAYER2 is looked up.

The calculation process of the first uniformity edge_gain_layer1 of a first layer and the first uniformity edge_gain_layer2 of a second layer is denoted by the formulas:

$$\text{if ( (grad\_up + grad\_down))} > 2* \text{ (grad\_left + grad\_right))}$$

$$\text{edge\_gain\_layer1} = \text{EDGE\_LUT\_LAYER1 (grad\_up + grad\_down)};$$

$$\text{edge\_gain\_layer2} = \text{EDGE\_LUT\_LAYER2 (grad\_up + grad\_down)}$$

$$\text{else if ( (grad\_left + grad\_right)} > 2* \text{ (grad\_up + grad\_down))}$$

$$\text{edge\_gain\_layer1} = \text{EDGE\_LUT\_LAYER1 (grad\_left + grad\_right)};$$

$$\text{edge\_gain\_layer2} = \text{EDGE\_LUT\_LAYER2 (grad\_left + grad\_right)};$$

$$\text{else}$$

$$\text{edge\_gain\_layer1} = 1;$$

$$\text{edge\_gain\_layer2} = 1;$$

$$\text{end}.$$

Then, for each layer, the uniformity in the second gradient direction is determined.

Specifically, if the gradient in the first diagonal direction is greater than twice the gradient in the second diagonal direction, or the gradient in the second diagonal direction is greater than twice the gradient in the first diagonal direction, it is considered that this pixel is located at a strong edge in the first diagonal direction or the second diagonal direction, and the corresponding table is looked up by using EDGE_LUT_LAYER1 or EDGE_LUT_LAYER2.

The calculation process of the second uniformity edge_d_gain layer1 of the first layer and the second uniformity edge_d_gain_layer2 of the second layer may be denoted by the formulas:

```
if ( (grad_d1 + grad_d4)> 2* (grad_d2 + grad_d3))

        edge_d_gain_layer1 = EDGE_LUT_LAYER1 (grad_d1 + grad_d4);

        edge_ d_gain_layer2 = EDGE_LUT_LAYER2 (grad_d1 + grad_d4)

    else if ( (grad_d2 + grad_d3) > 2* (grad_d1 + grad_d4))

        edge_ d_gain_layer1 = EDGE_LUT_LAYER1 (grad_d2 + grad_d3);

        edge_ d_gain_layer2 = EDGE_LUT_LAYER2 (grad_d2 + grad_d3);

    else

        edge_d_gain_layer1 = 1;

        edge_d_gain_layer2 = 1;

        end.
```

In the present invention, after determining the first uniformity and the second uniformity of the image to be processed, the edge contrast of the image to be processed is determined by using the first uniformity and the second uniformity. The edge contrast of each layer may be determined by using the first uniformity and the second uniformity of each layer. Specifically, the first uniformity and the second uniformity may serve as two components of the corresponding edge contrast, and when determining the fourth gain information based on the edge contrast, the first uniformity and the second uniformity may be integrated to determine the fourth gain information. Specifically, the first uniformity and the second uniformity may be multiplied to obtain the fourth gain information of the corresponding layer.

In the present invention, the fourth gain information may also be called a strong edge mask, which is not limited by the embodiments of the present invention, as long as its function can be realized.

At step 303, fifth gain information is determined based on a texture contrast of the image to be processed.

In the present invention, determining the fifth gain information based on the texture contrast of the image to be processed may be determining the fifth gain information of each layer based on the texture contrast of each layer in the image to be processed. That is, an intermediate frequency texture gradient is calculated to generate an intermediate frequency texture gain signal.

In the present invention, a gradient average in an area can reflect the uniformity of signal distribution in the area, and thus can reflect the texture distribution in the area. Therefore, the texture contrast of the corresponding pixel may be determined by calculating the gradient average in the area.

Based on this, in some embodiments, determining the fifth gain information based on the texture contrast of the image to be processed includes: acquiring a gradient average of the image to be processed in a plurality of gradient directions; and determining the fifth gain information of the image to be processed based on the gradient average.

Specifically, the gradient average in the calculation area may be determined first, and then the fifth gain information of the layer may be determined by using a corresponding relationship between the gradient average and the fifth gain information.

It should be noted that the corresponding relationship between the gradient average and the fifth gain information may be pre-constructed according to the historical gradient average and the corresponding historical gain information, and the corresponding relationship may be realized by LUT. For example, TEXTURE_LUT may be constructed according to the historical gradient average and the corresponding fifth gain information.

For example, the gradient average in eight directions in the 3*3 calculation area may be calculated first, and the gradient average of the pixel in eight directions may be denoted by the following formula:

Grad8 (i, j) = (abs (grad_up) + abs (grad_down) + abs (grad_left) + abs (grad_right) + abs (grad_ d1) + abs (grad_d2) + abs (grad_d3) + abs (grad_d4) + 4)/8.

Then, TEXTURE_LUT1 or TEXTURE_LUT2 is looked up by using the eight-direction gradient average. The calculation process of the fifth gain information texture_gain_layer1 of the first layer and the fifth gain information texture_gain_layer2 of the second layer is denoted by the formulas:

$$\text{texture\_gain\_layer1} = \text{TEXTURE\_LUT1 (Grad8)};$$

$$\text{texture\_gain\_layer2} = \text{TEXTURE\_LUT2 (Grad8)}.$$

In the present invention, considering that a gradient absolute order of magnitude of a high brightness area is much larger than that of a low brightness area, therefore, in order to provide comparability when comparing the whole image by using the gradient average determined based on the brightness of the local area, the gradient average may be normalized first before the fifth gain information is determined by using the gradient average, so that the fifth gain information can be obtained more accurately and the frequency control effect in the target edge information can be improved.

Based on this, in some embodiments, determining the fifth gain information of the image to be processed based on the gradient average may include: normalizing the gradient average; and determining the fifth gain information of the image to be processed based on the normalized gradient average.

Specifically, when normalizing the gradient average, the gradients in eight directions may be normalized by using a central pixel value of the calculation area, for example, dividing the gradient average by the central pixel value. The normalization may also be made based on a brightness average or a brightness weighted average of the calculation area, and the normalization may also be made by table lookup using the preset LUT or multiplication and right shift.

In the present invention, the fifth gain information may also be called a local texture mask, which is not limited by the embodiments of the present invention, as long as its function can be realized.

It should be noted that through steps 301 to 303, the contrast signal calculated based on the maximum and minimum values in the area, the four-direction strong edge mask calculated based on the eight-direction gradient and the local texture mask calculated based on the eight-direction normalized gradient can be obtained, so as to be used for the contrast control of the high-frequency signal in image processing, i.e., the control of the signal frequency in the target edge signal, thus realizing the control of the signal frequency in the image to be processed.

It should be noted that steps 301 to 303 may be executed at the same time or not, and the execution order of these steps does not affect the implementation effect of the embodiments of the present invention, which is not limited by the embodiments of the present invention.

At step 304, the third gain information, the fourth gain information and the fifth gain information are normalized based on the local average brightness of the image to be processed, to obtain the second gain information. For the convenience of understanding, Fig. 5 shows a flow chart of determining second gain information in an image processing method according to an embodiment of the present invention.

In the present invention, normalizing the third gain information, the fourth gain information and the fifth gain information to obtain the second gain information based on the local average brightness of the image to be processed may be normalizing the third gain information, the fourth gain information and the fifth gain information corresponding to each layer to obtain the second gain information of each layer based on the local average brightness of each layer in the image to be processed, that is, generating the edge strength control signal for the first layer and the second layer based on the brightness normalized LUT.

In the present invention, the local average brightness may be the average brightness in the calculation area, for example, the average brightness Mean33 (i, j) in the 3*3 calculation area, and may also be the weighted average in the calculation area, or the central pixel value in the calculation area.

In the present invention, the local average brightness can reflect the distribution uniformity of the signal frequency in the area, and the control of the signal frequency is different in different application scenarios. Therefore, in order to ensure the balance and accuracy of frequency control of different signals in the image to be processed, the obtained gain information may be normalized by using the local average brightness, and the gain information may be adjusted by using the scene gain.

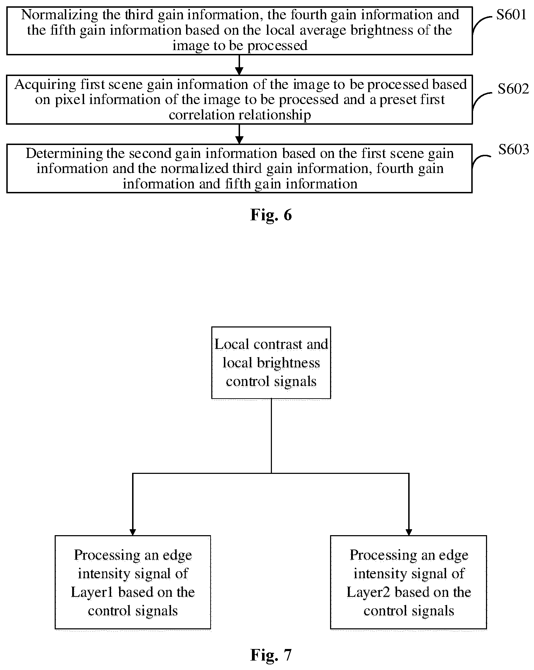

Based on this, as shown in Fig. 6, in some embodiments, normalizing the third gain information, the fourth gain information and the fifth gain information to obtain the second gain information may include the following steps.

At step 601, the third gain information, the fourth gain information and the fifth gain information are normalized based on the local average brightness of the image to be processed.

In the present invention, by the normalizing of the third gain information, the fourth gain information and the fifth gain information, the corresponding gain information may be subject to the fixed-point processing, so as to normalize and control the high-frequency signal (which needs to be added back for image processing) to a certain extent. Specifically, the enhancement and weakening operations may be performed on the high-frequency signal to be added back under different original signal brightness.

It should be noted that, since the image data is normalized first, and then the normalized data is multiplied by the high-frequency signal which needs to be added back for image processing, the floating-point calculation problem will occur, which will be unfriendly to hardware. Therefore, in order to avoid the floating-point calculation problem, in the embodiments of the present invention, the third gain information, the fourth gain information and the fifth gain information may be directly multiplied by the high-frequency signal which needs to be added back for image processing, and then may be subject to the right-shifted fixed-point processing.

In the present invention, the third gain information, the fourth gain information and the fifth gain information may be normalized first, so that the extracted target edge information may be controlled by using the normalized gain information. Accordingly, the third gain information, the fourth gain information and the fifth gain information may also be used first to perform a gaining process on the image to be processed, to obtain a gained signal, so that the target edge information may be determined by using the gained signal.

At step 602, first scene gain information of the image to be processed is obtained based on pixel information of the image to be processed and a preset first correlation relationship.

In the present invention, the first correlation relationship may be a pre-constructed correspondence relationship based on the historical scene gain and the corresponding historical pixel information. The first correlation relationship may be realized by LUT, for example, Scene_gain_LUT may be used to represent the first correlation relationship between the image to be processed and the first scene gain information.

At step 603, the second gain information is determined based on the first scene gain information and the normalized third gain information, fourth gain information and fifth gain information.

Specifically, the first scene gain information is multiplied by the normalized third gain information to adjust the third gain information, the first scene gain information is multiplied by the normalized fourth gain information to adjust the fourth gain information, and the first scene gain information is multiplied by the normalized fifth gain information to adjust the fifth gain information. The second gain information is obtained by multiplying the third gain information, the fourth gain information and the fifth gain information after being adjusted by the first scene gain information.

For example, the calculation process of the second gain information Total_gain_layer1 of the first layer may include the followings.

First, the local average brightness of the 3*3 calculation area is calculated.

Mean33 (i, j)=(window3x3 (1, 1)+window3x3 (1, 2)+window3x3 (1, 3) +window3x3 (2, 1)+window3x3 (2, 2)+window3x3 (2, 3)+window3x3 (3, 1)+window3x3 (3, 2)+window3x3 (3, 3))/9.

Then, the gain information is subject to the 10-bit fixed-point processing by using the local average brightness; the fixed-point processing method may be denoted by the following formula:

$$\text{contrast\_gain\_layer1} = \text{contrast\_gain\_layer1} .* \text{img};$$

$$\text{contrast\_gain\_layer1} = \text{contrast\_gain\_layer1} >> 10;$$

$$\text{edge\_gain\_layer1} = \text{edge\_gain\_layer1} .* \text{img};$$

$$\text{edge\_gain\_layer1} = \text{edge\_gain\_layer1} >> 10;$$

$$\text{texture\_gain\_layer1} = \text{texture\_gain\_layer1} .* \text{img};$$

$$\text{texture\_gain\_layer1} = \text{texture\_gain\_layer1} >> 10.$$

Img represents image information of an input original image, which may also be called the pixel information of the original image.

Then, the Scene_gain_LUT pre-constructed according to the scene is loaded, and the Scene_gain_LUT is index-searched by inputting img to obtain the first scene gain Scene_gain_layer1 of the corresponding scene, so that each gain information of the layer is further adjusted and optimized by using the Scene_gain_layer1. The Scene_gain_LUT is calculated and loaded by a driver in a module initialization stage. The length of the Scene_gain_LUT is 1024, and the fixed-point value is set to be 10 bits. The process of further adjusting and optimizing each gain information of the first layer by using the Scene_gain_layer1 may be denoted by the following formulas:

$$cene\_gain\_layer1 = Scene\_gain\_LUT\ (img);$$

$$contrast\_gain\_layer1 = contrast\_gain\_layer1\ .*Scene\_gain\_layer1;$$

$$edge\_gain\_layer1 = edge\_gain\_layer1\ .*Scene\_gain\_layer1;$$

$$texture\_gain\_layer1 = texture\_gain\_layer1\ .*Scene\_gain\_layer1.$$

Then, by using the first scene gain information and the normalized third gain information, fourth gain information and fifth gain information, the second gain information Total_gain_layer1 of the first layer is calculated, and the calculation process may be denoted by the following formula:

Total_gain_layer1=contrast_gain_layer1 * edge_gain_layer1 * texture_gain_layer1 * scene_gain_layer1.

The pixel information between similar scenes is approximate, but the brightness information will be different, for example, different ISO scenes and exposure scenes. Therefore, in the present invention, in order to further distinguish the signals between similar scenes, so as to further enhance the accuracy of the obtained second gain information and improve the control result of the signal frequency in the image to be processed, the second gain information may be further adjusted and optimized based on the local brightness of the image to be processed.

Based on this, in some embodiments, the method may further include: acquiring second scene gain information based on the local average brightness of the image to be processed and a preset second correlation relationship; and updating the second gain information by using the second scene gain information.

Specifically, based on the local average brightness of each layer in the image to be processed and the preset second correlation relationship of the corresponding layer, the second scene gain information of the layer is obtained, and the second gain information of the layer is adjusted and optimized by using the second scene gain information of the layer.

In the present invention, the second correlation relationship may be a correspondence relationship between the local average brightness and the second scene gain pre-constructed by LUT interpolation of similar scenes. The second correlation relationship may be realized by LUT, for example, Scene_gain2_LUT is used to represent the second correlation relationship between the image to be processed and the second scene gain.

For example, the process of updating the second gain information by using the second scene gain includes the followings.

The second scene gain scene_gain2layer1 of the first layer and the second scene gain scene_gain2_layer2 of the second layer are calculated. The calculation process may be denoted by the following formulas:

$$scene\_gain2\_layer1 = Scene\_LUT2\_Layer1\ (Mean33\ (i, j));$$

$$scene\_gain2\_layer2 = Scene\_LUT2\_Layer2\ (Mean33\ (i, j)).$$

The second gain of the corresponding layer is updated by using the second scene gain, and the updating process is denoted by the following formulas:

$$Total\_gain\_layer1 = scene\_gain2\_layer1 * Total\_gain\_layer1;$$

$$Total\_gain\_layer2 = scene\_gain2\_layer2 * Total\_gain\_layer2.$$

So far, through steps 301 to 304, the gain information that may be used to control the image frequency of the image to be processed is obtained.

At step 305, the image to be processed is filtered to obtain initial edge information of the image to be processed.

In the present invention, filtering the image to be processed may be down-sampling the image to be processed at different scales, so as to obtain the high-frequency signals with different frequencies, and obtaining the initial edge information of the image to be processed may be obtaining the first layer and the second layer.

It should be noted that the initial edge information may be an edge signal of the original image obtained through a high-frequency filter, as long as the obtained edge signal can achieve the effects of the embodiments of the present invention, and the specific type of the used filter and the specific down-sampling method do not affect the implementation results of the embodiments of the present invention, which thus is not limited by the embodiments of the present invention.

At step 306, the target edge information of the image to be processed is obtained based on the second gain information and the initial edge information, and the target edge information is configured for sharpening the image to be processed. For the convenience of understanding, Fig. 7 shows a schematic diagram of obtaining target edge information in an image processing method.

Specifically, the second gain information of each layer is multiplied by the initial edge information of the corresponding layer to obtain the target edge information of each layer. That is, according to the contrast and local brightness control signals, the edge intensity signals of the first layer and the second layer are processed.

For example, the calculation process of the target edge information img_layer1_strength_adjusted of the first layer and the target edge information img_layer2_strength_adjusted of the second layer may be denoted by the following formulas:

$$img\_layer1\_strength\_adjusted = Total\_gain\_layer1 *img\_layer1\_strength;$$

$$img\_layer2\_strength\_adjusted = Total\_gain\_layer2 *img\_layer2\_strength.$$

Img_layer1_strength represents initial edge information of the first layer and img_layer2_strength represents initial edge information of the second layer.

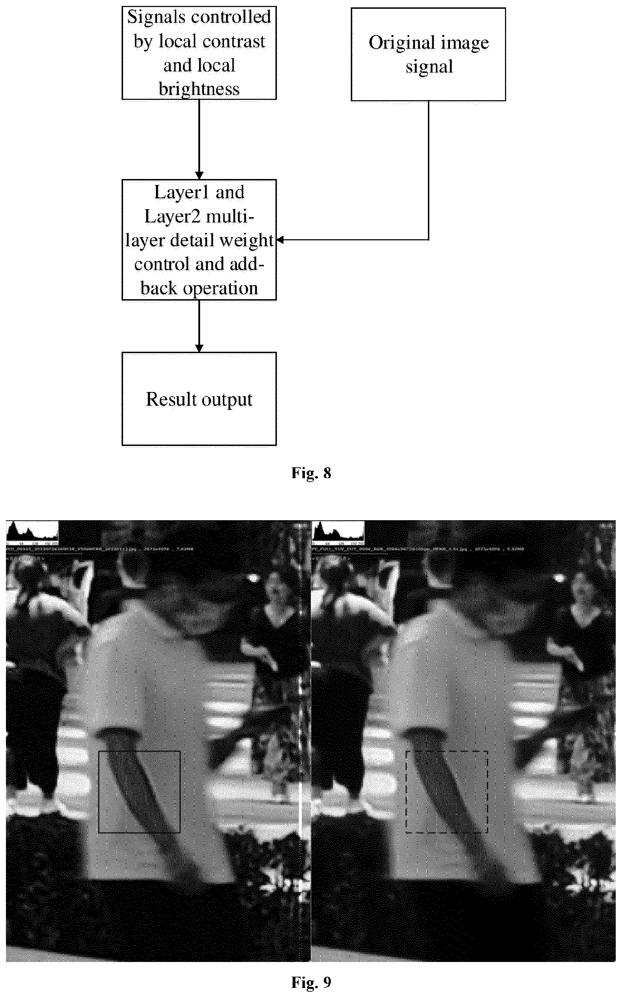

Through step 306, the target edge information for sharpening is obtained. During sharpening, the target edge information of each layer is multiplied by a corresponding weight and then added back to the original image, so that the sharpened image can be obtained. Adding the target edge information of each layer back to the original image after multiplying the target edge information of each layer by the corresponding weight, is performing the detail weight control and the add-back operation on the first layer and the second layer, based on the signals controlled by the contrast and local brightness and on the original image signal, and finally the sharpened image is output. For the convenience of understanding, Fig. 8 shows a schematic diagram of adding target edge information back to an image to be processed in an image processing method.

It should be noted that the weight of each layer determines the proportion of the corresponding layer added back to the original image, and may be set according to the image brightness, historical sharpening data and other factors, and specifically, may be determined according to the actual scene application requirement, which is not limited by the embodiments of the present invention.

For example, the image processing process may be denoted by the following formula:

Output_img=img_layer1_strength_adjusted*Layer1_ratio+img_layer2_strength _adjusted * Layer2_ratio+Src_img.

Output_img represents the sharpened image, Layer1_ratio represents a weight of the first layer, Layer2_ratio represents a weight of the second layer, and Src_img represents the original image.

To sum up, according to the image processing method provided by the embodiments of the present invention, the gain information is normalized by using the average brightness of the local area, and the balance of the gain information of different pixels is improved, so that the frequency control effect is improved when the signal frequency in the image to be processed is controlled by using the obtained gain information, thus improving the balance and accuracy of sharpening results, avoiding the problem of the black edge occurring in the pixel area with the low intensity due to signal enhancement by directly adding the high-frequency signal back, and hence improving the image display quality. Furthermore, by determining the gain information from three dimensions, namely the local contrast, the edge contrast and the texture contrast, the corresponding gain information can be determined for the high-frequency signal, the intermediate-frequency signal and the low-frequency signal of the image to be processed, respectively, thus improving the accuracy of the obtained gain information and hence improving the image display quality.

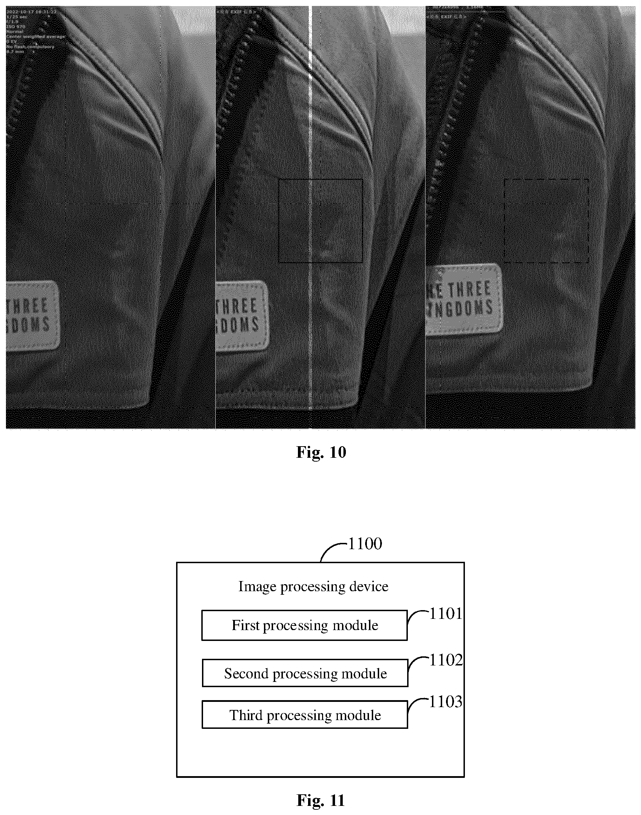

Figs. 9 and 10 show schematic diagrams of sharpening results obtained by using the image processing method in the related art and the image processing method in the embodiments of the present invention. The sharpening results of the image processing method in the related art are shown in solid blocks of Figs. 9 and 10, and the sharpening results of the image processing method in the embodiments of the present invention are shown in dashed blocks of Figs. 9 and 10. As shown in the solid blocks and the dashed blocks, the image processing method in the embodiments of the present invention can effectively remove the black edge phenomenon. Further, since the frequency signal in the initial edge information is enhanced or weakened based on the multiple dimensions of the contrast, the edge contrast and the texture contrast, the fineness of the signals in the edge area and the texture area can be improved, thus avoiding the problem that the low texture area is not delicate enough due to direct extraction and adding back of the high-frequency signal, which problem will cause the dirt and noise increases after adding the edge signal back, and improving the image display quality. Furthermore, since the edge information added back is normalized based on the local average brightness, the balance of different frequency signals in the sharpening process is guaranteed, thus avoiding the problem of excessive sharpening of some areas of the image caused by directly raising the edge signal add-back level due to intensified sharpening, and further improving the image display quality.

Fig. 11 is a block diagram of an image processing device 1100 according to an embodiment of the present invention. As shown in Fig. 11, the image processing device includes: a first processing module 1101 configured to determine first gain information of an image to be processed based on a contrast of the image to be processed; a second processing module 1102 configured to normalize the first gain information based on a local average brightness of the image to be processed to obtain second gain information; and a third processing module 1103 configured to obtain target edge information of the image to be processed based on the second gain information. The target edge information is configured for sharpening the image to be processed.

In some embodiments, the first gain information includes third gain information, fourth gain information and fifth gain information, and the first processing module 1101 is specifically configured to: determine the third gain information based on a local contrast of the image to be processed; determine the fourth gain information based on an edge contrast of the image to be processed; and determine the fifth gain information based on a texture contrast of the image to be processed.

In some embodiments, the first processing module 1101 may be further configured to: determine the local contrast of the image to be processed based on maximum and minimum values of a local brightness of the image to be processed.

In some embodiments, the first processing module 1101 may be further configured to: determine a first uniformity of the image to be processed in a first gradient direction, the first gradient direction including a horizontal direction and a vertical direction; determine a second uniformity of the image to be processed in a second gradient direction, the second gradient direction including a first diagonal direction and a second diagonal direction; and determine the edge contrast of the image to be processed based on the first uniformity and the second uniformity.

In some embodiments, the first processing module 1101 is specifically configured to: acquire first gradient information of the image to be processed in the horizontal direction; acquire second gradient information of the image to be processed in the vertical direction; and determine the first uniformity based on a difference degree between the first gradient information and the second gradient information.

In some embodiments, the first processing module 1101 is specifically configured to: acquire third gradient information of the image to be processed in the first diagonal direction; acquire fourth gradient information of the image to be processed in the second diagonal direction; and determine the second uniformity based on a difference degree between the third gradient information and the fourth gradient information.

In some embodiments, the first processing module 1101 is specifically configured to: acquire a gradient average of the image to be processed in a plurality of gradient directions; and determine the fifth gain information of the image to be processed based on the gradient average.

In some embodiments, the second processing module 1102 is specifically configured to: normalize the first gain information based on the local average brightness of the image to be processed; acquire first scene gain information of the image to be processed based on pixel information of the image to be processed and a preset first correlation relationship; and determine second gain information based on the first scene gain information and the normalized first gain information.

In some embodiments, the second processing module 1102 may be further configured to: acquire second scene gain information based on the local average brightness of the image to be processed and a preset second correlation relationship; and update the second gain information by using the second scene gain information.

In some embodiments, the third processing module 1103 is specifically configured to: filter the image to be processed to obtain initial edge information of the image to be processed; and obtain target edge information of the image to be processed based on the second gain information and the initial edge information.

In some embodiments, the image to be processed includes at least two layers, and the third processing module 1103 is specifically configured to: obtain edge information of each layer based on second gain information of each layer in the image to be processed; and add the edge information of each layer together to obtain the target edge information of the image to be processed.

Since the device provided by the embodiments of the present invention corresponds to the methods provided by the above embodiments, the implementation of the method is also applicable to the device provided by the embodiments of the present invention, and thus will not be described in detail in the embodiments of the present invention.

In the above embodiments of the present invention, the method and the device provided by the embodiments of the present invention are introduced. In order to realize the functions in the method provided by the embodiments of the present invention, the electronic apparatus may include a hardware structures and a software module, and the above functions are realized in the form of the hardware structure, the software module, or the hardware structure plus the software module. One of the above functions may be performed in the form of the hardware structure, the software module, or a combination of the hardware structure and the software module.

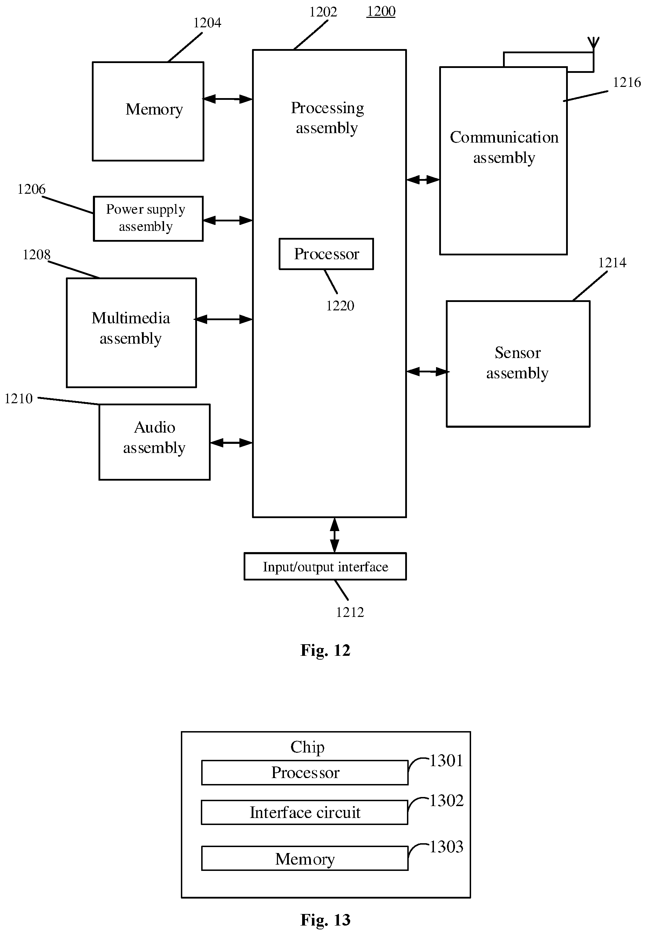

Fig. 12 is a block diagram of an electronic apparatus 1200 for implementing the above image processing method according to an exemplary embodiment. For example, the electronic apparatus 1200 may be a mobile phone, a computer, a message transceiver, a game console, a tablet device, a medical device, a fitness device, a personal digital assistant, etc.

As shown in Fig. 12, the electronic apparatus 1200 may include one or more of the following assemblies: a processing assembly 1202, a memory 1204, a power supply assembly 1206, a multimedia assembly 1208, an audio assembly 1210, an input/output (I/O) interface 1212, a sensor assembly 1214, and a communication assembly 1216.

The processing assembly 1202 generally controls the overall operation of the electronic apparatus 1200, such as operations associated with display, telephone call, data communication, camera operation and recording operation. The processing assembly 1202 may include one or more processors 1220 to execute instructions to complete all or part of the steps of the method described above. In addition, the processing assembly 1202 may include one or more modules to facilitate interaction between the processing assembly 1202 and other assemblies. For example, the processing assembly 1202 may include a multimedia module to facilitate interaction between the multimedia assembly 1208 and the processing assembly 1202.

The memory 1204 is configured to store various types of data to support operations in the electronic apparatus 1200. Examples of these data include instructions for any application or method operating on the electronic apparatus 1200, such as contact data, phone book data, messages, pictures, videos, and the like. The memory 1204 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply assembly 1206 provides power to various assemblies of the electronic apparatus 1200. The power supply assembly 1206 may include a power management system, one or more power supplies, and other assemblies associated with generating, managing and distributing power for the electronic apparatus 1200.

The multimedia assembly 1208 includes a screen that provides an output interface between the electronic apparatus 1200 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touch, sliding and gestures on the touch panel. The touch sensor can not only sense the boundary of the touch or sliding action, but also detect the duration and pressure related to the touch or sliding operation. In some embodiments, the multimedia assembly 1208 includes a front camera and/or a rear camera. When the electronic apparatus 1200 is in an operation mode, such as a shooting mode or a video mode, the front camera and/or the rear camera may receive external multimedia data. Each of the front camera and the rear camera may be a fixed optical lens system or have a focal length and an optical zoom capability.

The audio assembly 1210 is configured to output and/or input audio signals. For example, the audio assembly 1210 includes a microphone (MIC) configured to receive external audio signals when the electronic apparatus 1200 is in operation modes, such as a call mode, a recording mode and a voice recognition mode. The received audio signal may be further stored in the memory 1204 or transmitted via the communication assembly 1216. In some embodiments, the audio assembly 1210 further includes a speaker for outputting audio signals.

The I/O interface 1212 provides an interface between the processing assembly 1202 and peripheral interface modules, which may be keyboards, click wheels, buttons, etc. These buttons may include, but are not limited to, a home button, a volume button, a start button and a lock button.

The sensor assembly 1214 includes one or more sensors for providing various aspects of status assessments for the electronic apparatus 1200. For example, the sensor assembly 1214 may detect the on/off state of the electronic apparatus 1200, the relative positioning of assemblies, such as the display and keypad of the electronic apparatus 1200, the position change of the electronic apparatus 1200 or an assembly of the electronic apparatus 1200, the presence or absence of contact between the user and the electronic apparatus 1200, the orientation or acceleration/deceleration of the electronic apparatus 1200 and the temperature change of the electronic apparatus 1200. The sensor assembly 1214 may include a proximity sensor configured to detect the presence of a nearby object without any physical contact. The sensor assembly 1214 may also include an optical sensor, such as a CMOS or CCD image sensor, for use in imaging applications. In some embodiments, the sensor assembly 1214 may further include an acceleration sensor, a gyro sensor, a magnetic sensor, a pressure sensor or a temperature sensor.

The communication assembly 1216 is configured to facilitate wired or wireless communication between the electronic apparatus 1200 and other apparatuses. The electronic apparatus 1200 may access a wireless network based on communication standards, such as WiFi, 2G or 3G, 4G LTE, 5G NR (New Radio) or their combination. In an exemplary embodiment, the communication assembly 1216 receives a broadcast signal or broadcast related information from an external broadcast management system via a broadcast channel. In an exemplary embodiment, the communication assembly 1216 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the electronic apparatus 1200 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic apparatuses for performing the above methods.

In an exemplary embodiment, there is also provided a non-transitory computer-readable storage medium including instructions, such as the memory 1204 including instructions, which may be executed by the processor 1220 of the electronic apparatus 1200 to complete the above method. For example, the non-transitory computer-readable storage medium may be a ROM, a random access memory (RAM), a CD-ROM, a magnetic tape, a floppy disk and an optical data storage device.

The embodiments of the present invention also provide a non-transitory computer-readable storage medium storing computer instructions, and the computer instructions are configured to make a computer execute the image processing method described in the above embodiments of the present invention.

Embodiments of the present invention also provide a computer program product, including a computer program, which may be executed by a processor to perform the image processing method described in the above embodiments of the present invention.

The embodiments of the present invention also provide a chip, as shown in Fig. 13 which is a block diagram of the chip. The chip shown in Fig. 13 includes a processor 1301 and an interface circuit 1302. One or more processors 1301 may be provided, and one or more interface circuits 1302 may be provided.

Optionally, the chip further includes a memory 1303 for storing necessary computer programs and data. The interface circuit 1302 is used to receive a signal from the memory 1303 and send the signal to the processor 1301. The signal includes computer instructions stored in the memory 1303. When the processor 1301 executes the computer instructions, the electronic apparatus is allowed to execute the image processing method described in the above embodiments of the present invention.

It should be noted that the terms "first" and "second" in the specification and claims of the present invention and the above drawings are used to distinguish similar objects, and are not necessarily used to describe a specific order or sequence. It should be understood that these terms used may be interchanged under appropriate circumstances, so that the embodiments of the present invention described herein can be implemented in other orders than those illustrated or described herein. The implementations described in the following exemplary embodiments do not represent all embodiments consistent with the present invention. Rather, they are merely examples of devices and methods consistent with some aspects of the present invention as detailed in the appended claims.

In the description of the specification, descriptions referring to the terms "one embodiment", "some embodiments", "exemplary embodiments", "examples", "specific example" or "some examples" mean that specific features, structures, materials or characteristics described in connection with the embodiments or examples are included in at least one embodiment or example of the present invention. In the specification, the schematic expressions of the above terms do not necessarily refer to the same embodiment or example. Moreover, the specific features, structures, materials or characteristics described may be combined in any one or more embodiments or examples in a suitable manner.

Any procedure or method described in the flow charts or described in any other way herein may be understood to include one or more modules, portions or parts for storing executable codes that realize particular logic functions or procedures. Moreover, advantageous embodiments of the present invention includes other implementations in which the order of execution is different from that which is depicted or discussed, including executing functions in a substantially simultaneous manner or in an opposite order according to the related functions. This should be understood by those skilled in the art which embodiments of the present invention belong to.

The logic and/or step described in other manners herein or shown in the flow chart, for example, a particular sequence table of executable instructions for realizing the logical function, may be specifically achieved in any computer readable medium to be used by the instruction execution system, device or apparatus (such as the system based on computers, the system including processing modules or other systems capable of obtaining the instruction from the instruction execution system, device and apparatus and executing the instruction), or to be used in combination with the instruction execution system, device and apparatus. As to the specification, "the computer readable medium" may be any device adaptive for including, storing, communicating, propagating or transferring programs to be used by or in combination with the instruction execution system, device or apparatus. More specific examples (a non-exhaustive list) of the computer readable medium include but are not limited to: an electronic connection (a control method) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It is understood that each part of the embodiments of the present invention may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above methods of the embodiments of the present invention may be achieved by commanding the related hardware with programs. The programs may be stored in a computer readable storage medium, and the programs include one or a combination of the steps in the method embodiments of the present invention when run on a computer.

In addition, each function unit of the embodiments of the present invention may be integrated in a processing module, or these units may be physically separate, or two or more units are integrated in a processing module. The integrated module may be realized in a form of hardware or in a form of a software function module. When the integrated module is realized in a form of a software function module and is sold or used as a standalone product, the integrated module may be stored in a computer readable storage medium. The storage medium mentioned above may be read-only memory, magnetic disk or optical disk, etc.

**Claims**

1. An image processing method, comprising:

   determining (S201) first gain information of an image to be processed based on a contrast of the image to be processed;
   normalizing (S202) the first gain information based on a local average brightness of the image to be processed to obtain second gain information;
   obtaining (S203) target edge information of the image to be processed based on the second gain information; and sharpening the image to be processed based on the target edge information,
   wherein obtaining (S203) the target edge information of the image to be processed based on the second gain information comprises:

   filtering (S305) the image to be processed to obtain initial edge information of the image to be processed; and
   obtaining (S306) the target edge information of the image to be processed based on the second gain information and the initial edge information,
   **characterized in that**,
   normalizing (S202) the first gain information based on the local average brightness of the image to be processed to obtain the second gain information comprises:

   normalizing the first gain information based on the local average brightness of the image to be processed;
   acquiring first scene gain information of the image to be processed based on pixel information of the image to be processed and a preset first correlation relationship; and
   determining the second gain information based on the first scene gain information and the normalized first gain information.

2. The method according to claim 1, wherein the first gain information comprises third gain information, fourth gain information and fifth gain information, and determining (S201) the first gain information of the image to be processed based on the contrast of the image to be processed comprises:

   determining (S301) the third gain information based on a local contrast of the image to be processed;
   determining (S302) the fourth gain information based on an edge contrast of the image to be processed; and
   determining (S303) the fifth gain information based on a texture contrast of the image to be processed.

3. The method according to claim 2, wherein normalizing (S202) the first gain information based on the local average brightness of the image to be processed to obtain the second gain information comprises:
normalizing (S304) the third gain information, the fourth gain information and the fifth gain information based on the local average brightness of the image to be processed to obtain the second gain information.

4. The method according to claim 2 or 3, further comprising:
determining the local contrast of the image to be processed based on maximum and minimum values of a local brightness of the image to be processed.

5. The method according to any one of claims 2 to 4, further comprising:

   determining a first uniformity of the image to be processed in a first gradient direction, wherein the first gradient direction comprises a horizontal direction and a vertical direction;
   determining a second uniformity of the image to be processed in a second gradient direction, wherein the second gradient direction comprises a first diagonal direction and a second diagonal direction; and
   determining the edge contrast of the image to be processed based on the first uniformity and the second uniformity.

6. The method according to claim 5, wherein determining the first uniformity of the image to be processed in the first gradient direction comprises:

   acquiring first gradient information of the image to be processed in the horizontal direction;
   acquiring second gradient information of the image to be processed in the vertical direction; and
   determining the first uniformity based on a difference degree between the first gradient information and the second gradient information.

7. The method according to claim 5 or 6, wherein determining the second uniformity of the image to be processed in the second gradient direction comprises:

   acquiring third gradient information of the image to be processed in the first diagonal direction;
   acquiring fourth gradient information of the image to be processed in the second diagonal direction; and
   determining the second uniformity based on a difference degree between the third gradient information and the fourth gradient information.

8. The method according to any one of claims 2 to 7, wherein determining the fifth gain information based on the texture contrast of the image to be processed comprises:

   acquiring a gradient average of the image to be processed in a plurality of gradient directions; and
   determining the fifth gain information of the image to be processed based on the gradient average.

9. The method according to any one of claims 1 to 8, further comprising:

   acquiring second scene gain information based on the local average brightness of the image to be processed and a preset second correlation relationship; and
   updating the second gain information by using the second scene gain information.

10. The method according to one of claims 1 to 9, wherein the image to be processed comprises at least two layers, and obtaining (S203) the target edge information of the image to be processed based on the second gain information comprises:

    obtaining edge information of each layer based on second gain information of each layer in the image to be processed; and
    adding the edge information of each layer together to obtain the target edge information of the image to be processed.

11. An electronic apparatus (1200), comprising:

    at least one processor (1220); and

a memory (1204) communicated with the at least one processor (1220),
wherein the memory (1204) stores instructions executable by the at least one processor (1220), and the at least one processor (1220) is configured to execute an image processing method according to any one of claims 1 to 10, when the instructions are executed by the at least one processor (1220).

12. A chip, comprising one or more interface circuits (1302) and one or more processors (1301), wherein the interface circuit (1302) is configured to receive a signal from a memory (1204) of an electronic apparatus (1200) and send the signal to the processor (1301), the signal comprises computer instructions stored in the memory (1204) of the electronic apparatus (1200), and when the processor (1301) executes the computer instructions, the electronic apparatus (1200) executes an image processing method according to any one of claims 1 to 10.

**Patentansprüche**

1. Bildverarbeitungsverfahren, das umfasst:

   Bestimmen (S201) von ersten Verstärkungsinformationen eines zu verarbeitenden Bildes auf der Grundlage eines Kontrasts des zu verarbeitenden Bildes;
   Normalisieren (S202) der ersten Verstärkungsinformationen auf der Grundlage einer lokalen Durchschnittshelligkeit des zu verarbeitenden Bildes, um zweite Verstärkungsinformationen zu erhalten;
   Erhalten (S203) von Zielkanteninformationen des zu verarbeitenden Bildes auf der Grundlage der zweiten Verstärkungsinformationen; und
   Schärfen des zu verarbeitenden Bildes auf der Grundlage der Zielkanteninformationen,
   wobei das Erhalten (S203) der Zielkanteninformationen des zu verarbeitenden Bildes auf der Grundlage der zweiten Verstärkungsinformationen umfasst:

   filtern (S305) des zu verarbeitenden Bildes, um ursprüngliche Kanteninformationen des zu verarbeitenden Bildes zu erhalten; und
   Erhalten (S306) der Zielkanteninformationen des zu verarbeitenden Bildes auf der Grundlage der zweiten Verstärkungsinformationen und der ursprünglichen Kanteninformationen,
   **dadurch gekennzeichnet, dass**
   das Normalisieren (S202) der ersten Verstärkungsinformationen auf der Grundlage der lokalen Durchschnittshelligkeit des zu verarbeitenden Bildes, um die zweiten Verstärkungsinformationen zu erhalten, umfasst:

   Normalisieren der ersten Verstärkungsinformationen auf der Grundlage der lokalen Durchschnittshelligkeit des zu verarbeitenden Bildes;
   Erfassen erster Szenenverstärkungsinformationen des zu verarbeitenden Bildes auf der Grundlage von Pixelinformationen des zu verarbeitenden Bildes und einer voreingestellten ersten Korrelationsbeziehung; und
   Bestimmen der zweiten Verstärkungsinformationen auf der Grundlage der ersten Szenenverstärkungsinformationen und der normalisierten ersten Verstärkungsinformationen.

2. Verfahren nach Anspruch **1,** wobei die ersten Verstärkungsinformationen dritte Verstärkungsinformationen, vierte Verstärkungsinformationen und fünfte Verstärkungsinformationen umfassen, und das Bestimmen (S201) der ersten Verstärkungsinformationen des zu verarbeitenden Bildes auf der Grundlage des Kontrasts des zu verarbeitenden Bildes umfasst:

   Bestimmen (S301) der dritten Verstärkungsinformationen auf der Grundlage eines lokalen Kontrasts des zu verarbeitenden Bildes;
   Bestimmen (S302) der vierten Verstärkungsinformationen auf der Grundlage eines Kantenkontrasts des zu verarbeitenden Bildes; und
   Bestimmen (S303) der vierten Verstärkungsinformationen auf der Grundlage eines Texturkontrasts des zu verarbeitenden Bildes;

3. Verfahren nach Anspruch 2, wobei das Normalisieren (S202) der ersten Verstärkungsinformationen auf der Grundlage der lokalen Durchschnittshelligkeit des zu verarbeitenden Bildes, um die zweiten Verstärkungsinformationen zu erhalten, umfasst:

Normalisieren (S304) der dritten Verstärkungsinformationen, der vierten Verstärkungsinformationen und der fünften Verstärkungsinformationen auf der Grundlage der lokalen Durchschnittshelligkeit des zu verarbeitenden Bildes, um die zweiten Verstärkungsinformationen zu erhalten.

4. Verfahren nach Anspruch 2 oder 3, das ferner umfasst:
Bestimmen des lokalen Kontrasts des zu verarbeitenden Bildes auf der Grundlage von Maximal- und Minimalwerten einer lokalen Helligkeit des zu verarbeitenden Bildes.

5. Verfahren nach einem der Ansprüche 2 bis 4, das ferner umfasst:

Bestimmen einer ersten Gleichmäßigkeit des zu verarbeitenden Bildes in einer ersten Gradientenrichtung, wobei die erste Gradientenrichtung eine horizontale Richtung und eine vertikale Richtung umfasst;
Bestimmen einer zweiten Gleichmäßigkeit des zu verarbeitenden Bildes in einer zweiten Gradientenrichtung, wobei die zweiten Gradientenrichtung eine erste diagonale Richtung und eine zweite diagonale Richtung umfasst; und
Bestimmen des Kantenkontrasts des zu verarbeitenden Bildes auf der Grundlage der ersten Gleichmäßigkeit und der zweiten Gleichmäßigkeit.

6. Verfahren nach Anspruch 5, wobei das Bestimmen der ersten Gleichmäßigkeit des zu verarbeitenden Bildes in der ersten Gradientenrichtung umfasst:

Erfassen der ersten Gradienteninformationen des zu verarbeitenden Bildes in horizontaler Richtung;
Erfassen der zweiten Gradienteninformationen des zu verarbeitenden Bildes in vertikaler Richtung; und
Bestimmen der ersten Gleichmäßigkeit auf der Grundlage eines Differenzgrades zwischen den ersten Gradienteninformationen und den zweiten Gradienteninformationen.

7. Verfahren nach Anspruch 5 oder 6, wobei das Bestimmen der zweiten Gleichmäßigkeit des zu verarbeitenden Bildes in der zweiten Gradientenrichtung umfasst:

Erfassen der dritten Gradienteninformationen des zu verarbeitenden Bildes in der ersten diagonalen Richtung;
Erfassen der vierten Gradienteninformationen des zu verarbeitenden Bildes in der zweiten diagonalen Richtung; und
Bestimmen der zweiten Gleichmäßigkeit auf der Grundlage eines Differenzgrades zwischen den dritten Gradienteninformationen und den vierten Gradienteninformationen.

8. Verfahren nach einem der Ansprüche 2 bis 7, wobei das Bestimmen der fünften Verstärkungsinformationen auf der Grundlage des Texturkontrasts des zu verarbeitenden Bildes umfasst:

Erfassen eines Gradientenmittelwerts des zu verarbeitenden Bildes in einer Vielzahl von Gradientenrichtungen; und
Bestimmen der fünften Verstärkungsinformationen des zu verarbeitenden Bildes auf der Grundlage des Gradientenmittelwerts.

9. Verfahren nach einem der Ansprüche 1 bis 8, das ferner umfasst:

Erfassen von zweiten Szenenverstärkungsinformationen auf der Grundlage der lokalen Durchschnittshelligkeit des zu verarbeitenden Bildes und einer voreingestellten zweiten Korrelationsbeziehung; und
Aktualisieren der zweiten Verstärkungsinformationen unter Verwendung der zweiten Szenenverstärkungsinformationen.

10. Verfahren nach einem der Ansprüche 1 bis 9, wobei das zu verarbeitende Bild mindestens zwei Schichten umfasst, und das Erhalten (S203) der Zielkanteninformationen des zu verarbeitenden Bildes auf der Grundlage der zweiten Verstärkungsinformationen umfasst:

Erhalten von Kanteninformationen jeder Schicht auf der Grundlage der zweiten Verstärkungsinformationen jeder Schicht in dem zu verarbeitenden Bild; und
Hinzufügen der Kanteninformationen jeder Schicht, um die Zielkanteninformationen des zu verarbeitenden Bildes zu erhalten.

11. Elektronische Vorrichtung (1200), die aufweist:

mindestens einem Prozessor (1220); und
einen Speicher (1204), der mit dem mindestens einen Prozessor (1220) verbunden ist,
wobei der Speicher (1204) Anweisungen speichert, die von dem mindestens einen Prozessor (1220) ausgeführt werden können, und wobei der mindestens eine Prozessor (1220) so ausgebildet ist, dass er ein Bildverarbeitungsverfahren nach einem der Ansprüche 1 bis 10 ausführt, wenn die Anweisungen von dem mindestens einen Prozessor (1220) ausgeführt werden.

12. Chip, der eine oder mehrere Schnittstellenschaltungen (1302) und einen oder mehrere Prozessoren (1301) aufweist, wobei die Schnittstellenschaltung (1302) so ausgebildet ist, dass sie ein Signal von einem Speicher (1204) einer elektronischen Vorrichtung (1200) empfängt und das Signal an den Prozessor (1301) sendet, wobei das Signal Computeranweisungen umfasst, die in dem Speicher (1204) der elektronischen Vorrichtung (1200) gespeichert sind, und wenn der Prozessor (1301) die Computeranweisungen ausführt, führt die elektronische Vorrichtung (1200) ein Bildverarbeitungsverfahren nach einem der Ansprüche 1 bis 10 aus.

**Revendications**

1. Procédé de traitement d'image, comprenant les étapes consistant à :

déterminer (S201) des premières informations de gain d'une image à traiter sur la base d'un contraste de l'image à traiter ;
normaliser (S202) les premières informations de gain sur la base d'une luminosité moyenne locale de l'image à traiter pour obtenir des deuxièmes informations de gain ;
obtenir (S203) des informations de contour cibles de l'image à traiter sur la base des deuxièmes informations de gain ; et
améliorer la netteté de l'image à traiter sur la base des informations de contour cibles,
dans lequel l'étape d'obtention (S203) des informations de contour cibles de l'image à traiter sur la base des deuxièmes informations de gain comprend les étapes consistant à :

filtrer (S305) l'image à traiter pour obtenir des informations de contour initiales de l'image à traiter ; et
obtenir (S306) les informations de contour cibles de l'image à traiter sur la base des deuxièmes informations de gain et des informations de contour initiales,
**caractérisé en ce que**,
l'étape de normalisation (S202) des premières informations de gain sur la base de la luminosité moyenne locale de l'image à traiter pour obtenir les deuxièmes informations de gain consiste à :

normaliser les premières informations de gain sur la base de la luminosité moyenne locale de l'image à traiter ;
acquérir des premières informations de gain de scène de l'image à traiter sur la base d'informations de pixels de l'image à traiter et d'une première relation de corrélation prédéfinie ; et
déterminer les deuxièmes informations de gain sur la base des premières informations de gain de scène et des premières informations de gain normalisées.

2. Procédé selon la revendication 1, dans lequel les premières informations de gain comprennent des troisièmes informations de gain, des quatrièmes informations de gain et des cinquièmes informations de gain, et l'étape de détermination (S201) des premières informations de gain de l'image à traiter sur la base du contraste de l'image à traiter comprend les étapes consistant à :

déterminer (S301) les troisièmes informations de gain sur la base d'un contraste local de l'image à traiter ;
déterminer (S302) les quatrièmes informations de gain sur la base d'un contraste de contour de l'image à traiter ; et
déterminer (S303) les cinquièmes informations de gain sur la base d'un contraste de texture de l'image à traiter.

3. Procédé selon la revendication 2, dans lequel l'étape de normalisation (S202) des premières informations de gain sur la base de la luminosité moyenne locale de l'image à traiter pour obtenir les deuxièmes informations de gain comprend l'étape consistant à :

normaliser (S304) les troisièmes informations de gain, les quatrièmes informations de gain et les cinquièmes informations de gain sur la base de la luminosité moyenne locale de l'image à traiter pour obtenir les deuxièmes informations de gain.

4. Procédé selon la revendication 2 ou la revendication 3, comprenant en outre l'étape consistant à :
déterminer le contraste local de l'image à traiter sur la base de valeurs maximale et minimale d'une luminosité locale de l'image à traiter.

5. Procédé selon l'une quelconque des revendications 2 à 4, comprenant en outre les étapes consistant à :

déterminer une première uniformité de l'image à traiter dans une première direction de gradient, dans lequel la première direction de gradient comprend une direction horizontale et une direction verticale ;
déterminer une seconde uniformité de l'image à traiter dans une seconde direction de gradient, dans lequel la seconde direction de gradient comprend une première direction diagonale et une seconde direction diagonale ; et
déterminer le contraste de contour de l'image à traiter sur la base de la première uniformité et de la seconde uniformité.

6. Procédé selon la revendication 5, dans lequel l'étape de détermination de la première uniformité de l'image à traiter dans la première direction de gradient consiste à :

acquérir des premières informations de gradient de l'image à traiter dans la direction horizontale ;
acquérir des deuxièmes informations de gradient de l'image à traiter dans la direction verticale ; et
déterminer la première uniformité sur la base d'un degré de différence entre les premières informations de gradient et les deuxièmes informations de gradient.

7. Procédé selon la revendication 5 ou la revendication 6, dans lequel l'étape de détermination de la seconde uniformité de l'image à traiter dans la seconde direction de gradient consiste à :

acquérir des troisièmes informations de gradient de l'image à traiter dans la première direction diagonale ;
acquérir des quatrièmes informations de gradient de l'image à traiter dans la seconde direction diagonale ; et
déterminer la seconde uniformité sur la base d'un degré de différence entre les troisièmes informations de gradient et les quatrièmes informations de gradient.

8. Procédé selon l'une quelconque des revendications 2 à 7, dans lequel l'étape de détermination des cinquièmes informations de gain sur la base du contraste de texture de l'image à traiter consiste à :

acquérir une moyenne de gradients de l'image à traiter dans une pluralité de directions de gradient ; et
déterminer les cinquièmes informations de gain de l'image à traiter sur la base de la moyenne de gradients.

9. Procédé selon l'une quelconque des revendications 1 à 8, comprenant en outre les étapes consistant à :

acquérir des deuxièmes informations de gain de scène sur la base de la luminosité moyenne locale de l'image à traiter et d'une seconde relation de corrélation prédéfinie ; et
mettre à jour les deuxièmes informations de gain en utilisant les deuxièmes informations de gain de scène.

10. Procédé selon l'une des revendications 1 à 9, dans lequel l'image à traiter comprend au moins deux couches, et l'étape d'obtention (S203) des informations de contour cibles de l'image à traiter sur la base des deuxièmes informations de gain consiste à :

obtenir des informations de contour de chaque couche sur la base de deuxièmes informations de gain de chaque couche de l'image à traiter ; et
ajouter les informations de contour de chaque couche les unes aux autres pour obtenir les informations de contour cibles de l'image à traiter.

11. Appareil électronique (1200), comprenant :

au moins un processeur (1220) ; et
une mémoire (1204) en communication avec l'au moins un processeur (1220),

dans lequel la mémoire (1204) maintient des instructions exécutables par l'au moins un processeur (1220), et l'au moins un processeur (1220) est configuré pour exécuter un procédé de traitement d'image selon l'une quelconque des revendications 1 à 10, lorsque les instructions sont exécutées par l'au moins un processeur (1220).

12. Puce, comprenant un ou plusieurs circuits d'interface (1302) et un ou plusieurs processeurs (1301), dans laquelle le circuit d'interface (1302) est configuré pour recevoir un signal en provenance d'une mémoire (1204) d'un appareil électronique (1200) et pour envoyer le signal au processeur (1301), le signal comprend des instructions d'ordinateur maintenues dans la mémoire (1204) de l'appareil électronique (1200), et lorsque le processeur (1301) exécute les instructions d'ordinateur, l'appareil électronique (1200) exécute un procédé de traitement d'image selon l'une quelconque des revendications 1 à 10.

**Fig. 1**

Determining first gain information of an image to be processed based on a contrast of the image to be processed — S201

Normalizing the first gain information based on a local average brightness of the image to be processed to obtain second gain information — S202

Obtaining target edge information of the image to be processed based on the second gain information, the target edge information being configured for sharpening the image to be processed — S203

**Fig. 2**

Determining third gain information based on a local contrast of an image to be processed — S301

Determining fourth gain information based on an edge contrast of the image to be processed — S302

Determining fifth gain information based on a texture contrast of the image to be processed — S303

Normalizing the third gain information, the fourth gain information and the fifth gain information based on a local average brightness of the image to be processed to obtain second gain information — S304

Filtering the image to be processed to obtain initial edge information of the image to be processed — S305

Obtaining target edge information of the image to be processed based on the second gain information and the initial edge information, the target edge information being configured for sharpening the image to be processed — S306

**Fig. 3**

**Fig. 3a**

**Fig. 3b**

```
                    ┌──────────────┐
                    │  Taking a    │
         ┌──────────│neighbourhood of│──────────┐
         │          │a current pixel as│         │
         │          │a calculation area│         │
         │          └──────────────┘              │
         │                 │                      │
         ▼                 ▼                      ▼
┌──────────────┐   ┌──────────────┐      ┌──────────────┐
│ Calculating a│   │ Intermediate-│      │High-frequency│
│local contrast│   │frequency texture│   │edge gradient │
│ signal based on│ │  gradient    │      │ calculation  │
│ maximum and  │   │ calculation  │      └──────────────┘
│minimum values│   └──────────────┘              │
│  in the area │          │                      ▼
└──────────────┘          ▼              ┌──────────────┐
         │        ┌──────────────┐       │ Generating a │
         │        │Generating an │       │high-frequency│
         ▼        │ intermediate-│       │edge gain signal│
┌──────────────┐  │frequency texture│    └──────────────┘
│Generating a local│ gain signal  │
│ contrast gain │  └──────────────┘
│    signal     │
└──────────────┘
```

**Fig. 4**

```
                ┌──────────────┐
                │  Taking a    │
                │neighbourhood of│
                │a current pixel as│
                │a calculation area│
                └──────────────┘
                       │
                       ▼
                ┌──────────────┐
                │ Calculating a│
                │local uniformity│
                └──────────────┘
                       │
         ┌─────────────┴─────────────┐
         ▼                           ▼
┌──────────────────┐        ┌──────────────────┐
│ Generating an edge│       │ Generating an edge│
│intensity control signal│  │intensity control signal│
│ for Layer1 based on│      │ for Layer2 based on│
│   brightness     │        │   brightness     │
│ normalization LUT.│       │ normalization LUT.│
└──────────────────┘        └──────────────────┘
```

**Fig. 5**

| Normalizing the third gain information, the fourth gain information and the fifth gain information based on the local average brightness of the image to be processed | $\sim$ S601 |
|---|---|

$\downarrow$

| Acquiring first scene gain information of the image to be processed based on pixel information of the image to be processed and a preset first correlation relationship | $\sim$ S602 |
|---|---|

$\downarrow$

| Determining the second gain information based on the first scene gain information and the normalized third gain information, fourth gain information and fifth gain information | $\sim$ S603 |
|---|---|

**Fig. 6**

Local contrast and local brightness control signals

| Processing an edge intensity signal of Layer1 based on the control signals | Processing an edge intensity signal of Layer2 based on the control signals |
|---|---|

**Fig. 7**

Fig. 8

Fig. 9

**Fig. 10**

**Fig. 11**

1204

1202    1200

Memory

Processing
assembly

Communication
assembly

1216

1206

Power supply
assembly

Processor

1208

Multimedia
assembly

1220

Sensor
assembly

1214

1210

Audio
assembly

Input/output interface

1212

**Fig. 12**

Chip

Processor    1301

Interface circuit    1302

Memory    1303

**Fig. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1816602 A1